# EUROPÄISCHE PATENTSCHRIFT

(11) **EP 1 123 185 B1**
(45) Veröffentlichungstag und Bekanntmachung des Hinweises auf die Patenterteilung: **05.02.2003**
(21) Anmeldenummer: 99953417.5
(22) Anmeldetag: 21.10.1999
(51) Int. Cl.: B29C 45/17

(54) **SPRITZGIESSMASCHINE**
INJECTION MOULDING MACHINE
PRESSE A INJECTION

(30) Priorität: 21.10.1998 AT 68898 U
(43) Veröffentlichungstag der Anmeldung: 16.08.2001
(73) Patentinhaber: ENGEL MASCHINENBAU GESELLSCHAFT MBH, A-4311 Schwertberg (AT)
(72) Erfinder: ELLINGER, Alfred, A-4320 Perg (AT); EPPICH, Stefan, Arbing Nr. 104 (AT)
(74) Vertreter: Torggler, Paul Norbert, Dr.
(86) Internationale Anmeldenummer: AT9900255
(87) Internationale Veröffentlichungsnummer: WO00023242

(56) Entgegenhaltungen:
- EP-A- 0 188 000
- DE-A- 4 230 348
- DE-C- 684 536
- US-A- 3 345 691

## Beschreibung

Die Erfindung bezieht sich auf eine Spritzgießmaschine mit einem Maschinenrahmen, einer ortsfesten und einer durch einen Schließmechanismus, der beispielsweise von einem Kurbeltrieb oder einem Kniehebelmechanismus gebildet wird, bewegbaren Formaufspannplatte, wobei die bewegbare Formaufspannplatte, und die ortsfeste Formaufspannplatte ohne Holme ausschließlich über den Maschinenrahmen verbunden sind, so daß die während des Schließvorganges auftretende Schließkraft und die während des Einspritzens auftretende Auftreibkraft zwischen den Formaufspannplatten nur über den Maschinenrahmen abgeleitet werden, und mit einem Formhöhenverstellmechanismus.

Eine derartige Spritzgießmaschine ist aus er DE 42 30 348 C2 bekannt.

Bei dieser Spritzgießmaschine ist der Antrieb für den Kniehebelmechanismus beweglich gelagert, was erhebliche Massenbewegungen bei den Schließ- und Öffnungsvorgängen zur Folge hat.

Aufgabe der Erfindung ist es, eine Spritzgießmaschine dieser Art zu verbessern.

Die erfindungsgemäße Aufgabe wird dadurch erreicht, daß die Schließkraft vom Schließmechanismus über den Formhöhenverstellmechanismus auf die bewegbare Formaufspannplatte übertragen wird.

Vorteilhaft ist vorgesehen, daß mindestens ein Teil des Formhöhenverstellmechanismus an der bewegbaren Formaufspannplatte angreift.

Ein Ausführungsbeispiel der Erfindung sieht vor, daß der Formhöhenverstellmechanismus mindestens eine Mutter und mindestens eine Spindel umfaßt, die in der bewegbaren Formaufspannplatte gelagert bzw. aufgenommen sind.

Eine sehr kompakte Ausführung der bewegbaren Formaufspannplatte des Formhöhenverstellmechanismus wird dadurch erzielt, daß die mindestens eine Mutter in der bewegbaren Formaufspannplatte drehbar gelagert ist und daß die mindestens eine Spindel in einen Hohlraum der bewegbaren Formaufspannplatte ragt.

Ein weiteres Ausführungsbeispiel der Erfindung sieht vor, daß der Formhöhenverstellmechanismus von einem auf der bewegbaren Formaufspannplatte gelagerten Motor betätigt wird, wobei als Motor ein Elektromotor, vorzugsweise ein Servomotor eingesetzt ist.

Nachfolgend wird ein Ausführungsbeispiel anhand der Figuren der beiliegenden Zeichnungen eingehend beschrieben.

Die Fig. 1 zeigt schematisch eine Seitenansicht einer erfindungsgemäßen Spritzgießmaschine,
die Fig. 2 zeigt einen Horizontalschnitt durch eine bewegbare Formaufspannplatte mit dem Formhöhenverstellmechanismus,

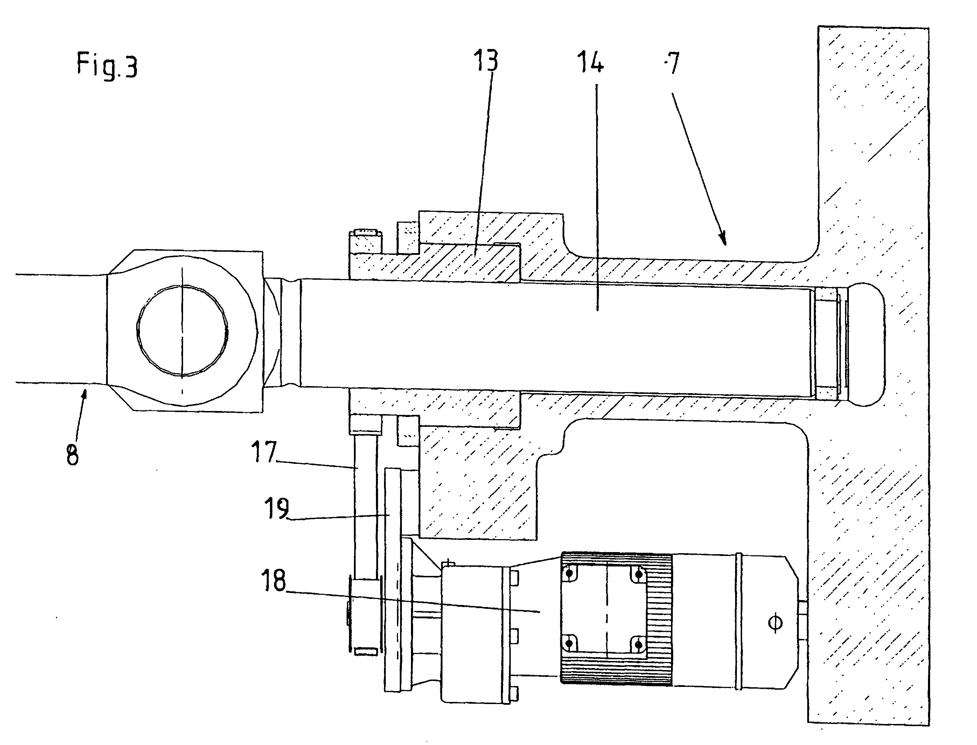

die Fig. 3 zeigt einen Vertikalschnitt durch die bewegbare Formaufspannplatte mit dem Formhöhenverstellmechanismus und
die Fig. 4 zeigt eine Stirnansicht der bewegbaren Formaufspannplatte, wobei der Formhöhenverstellmechanismus teilweise im Schnitt gezeichnet ist.

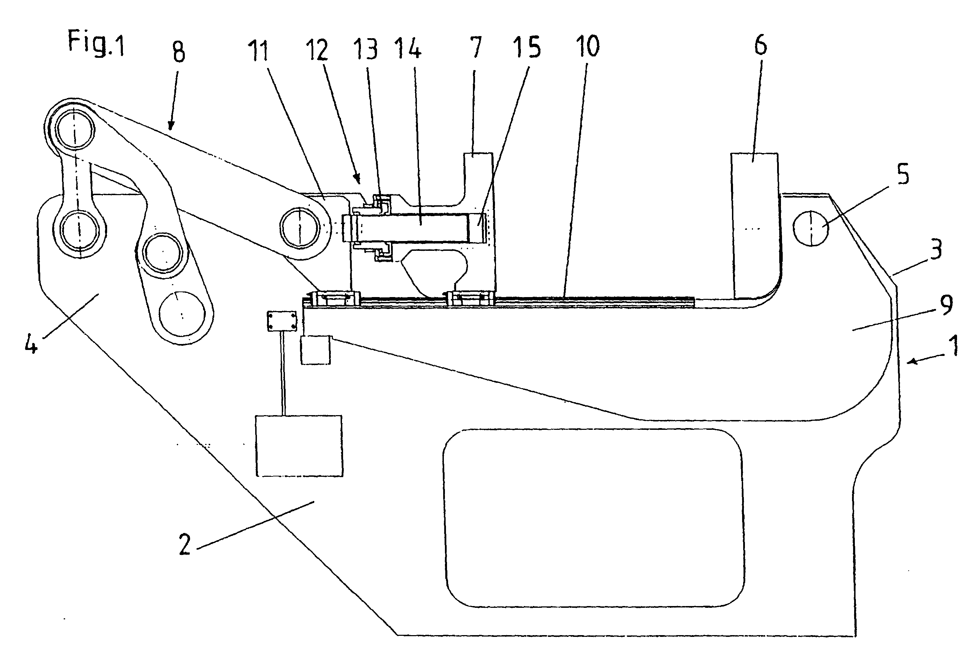

Die in der Figur 1 gezeigte Spritzgießmaschine weist einen im wesentlichen C-förmigen Rahmen 1 mit einem Basisteil 2 und Schenkeln 3, 4 auf. Am Schenkel 3 ist über ein Gelenk 5 die ortsfeste Formaufspannplatte 6 angeordnet und die verfahrbare Formaufspannplatte 7 ist über einen Schließmechanismus 8 mit dem Schenkel 4 des C-förmigen Rahmens 1 verbunden. Im gezeigten Ausführungsbeispiel wird der Schließmechanismus 8 von einem mit einem Kurbeltrieb kombinierten Kniehebelmechanismus gebildet. Der Schließmechanismus 8 bildet einen Teil der Schließeinrichtung für an den Formaufspannplatten 6, 7 angeordnete Formhälften (nicht dargestellt) und wird von einem in der Fig. 1 nicht dargestellten Elektromotor über ein entsprechendes Getriebe angetrieben.

Ebenfalls um das Gelenk 5 verschwenkbar gelagert ist die L-förmige Konsole 9, die mit der ortsfesten Formaufspannplatte 6 starr verbunden ist. Die Konsole 9 trägt Führungsschienen 10, auf denen die verfahrbare Formaufspannplatte 7 verschiebbar ist.

Die L-förmige Konsole 9 bewirkt somit eine parallele Ausrichtung der Aufspannplatten 6, 7. Aufgrund der gelenkigen Verbindung 5 der ortsfesten Formaufspannplatte 6 mit dem Schenkel 3 des Rahmens 1 sowie der über den Schließmechanismus 8 vermittelten gelenkigen Verbindung der verfahrbaren Formaufspannplatte 7 mit dem Schenkel 4 des Rahmens 1 wird die parallele Ausrichtung zwischen den Formaufspannplatten 6, 7 auch während der Aufbringung der Schließkraft aufrechterhalten, wenn der C-förmige Rahmen 1 elastisch verformt wird und die Schenkel 3, 4 aufgebogen werden. Der Schenkel 4 des Rahmens 1 dient als Stirnplatte.

Derartige holmlose Spritzgießmaschinen sind hinlänglich bekannt. Eine weitere Erläuterung von Details einer solchen Spritzgießmaschine ist daher an dieser Stelle nicht erforderlich.

Der Schließmechanismus 8, d.h. der mit einem Kurbeltrieb kombinierte Kniehebelmechanismus greift nicht unmittelbar an der bewegbaren Formaufspannplatte 7 an, sondern an einer Druckplatte 11. Die Druckplatte 11 ist ebenso wie die bewegbare Formaufspannplatte 7 auf den Schienen 10 am Rahmen 1 verfahrbar.

Die bewegbare Formaufspannplatte 7 ist über den Formhöhenverstellmechanismus 12 an der Druckplatte 11 abgestützt. Der Formhöhenverstellmechanismus 12 umfaßt mindestens eine an der bewegbaren Formaufspannplatte 7 drehbar gelagerte Mutter 13, in die mindestens eine an der Druckplatte 11 befestigte Spindel 14 eingreift. Die Spindel 14 ist an der Druckplatte 11 unverdrehbar gehalten und ragt in einen Hohlraum 15 der bewegbaren Formaufspannplatte 7. Am vorderen Ende ist die Spindel 14 mit einer Führung 16 für die Spindel 14 im Hohlraum 15 versehen. Die Führung 16 ist im Ausführungsbeispiel als Gleitlager ausgeführt.

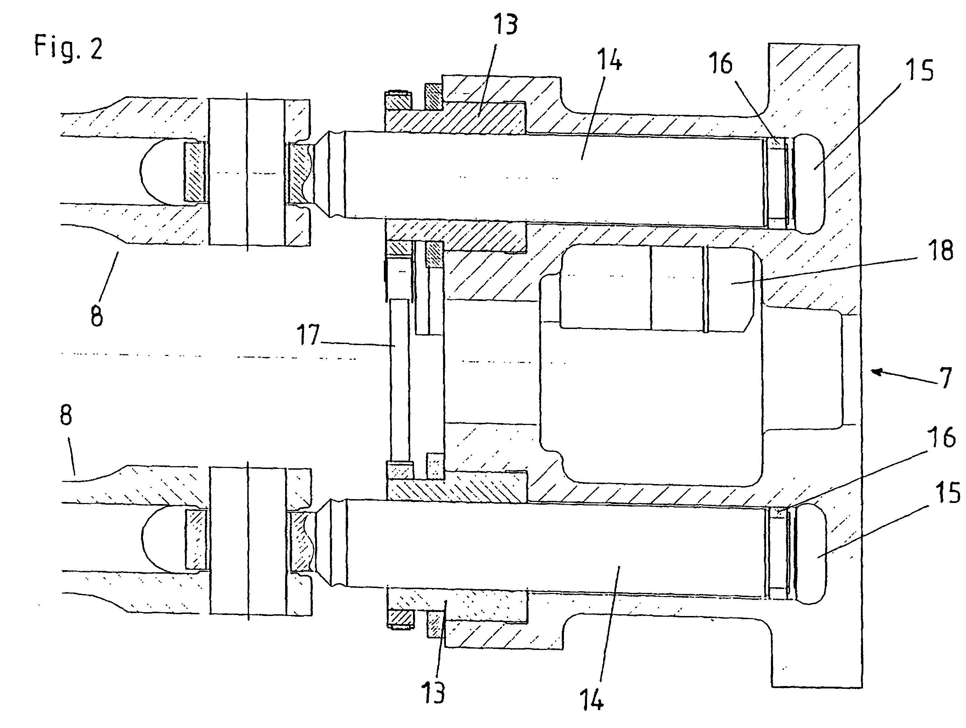

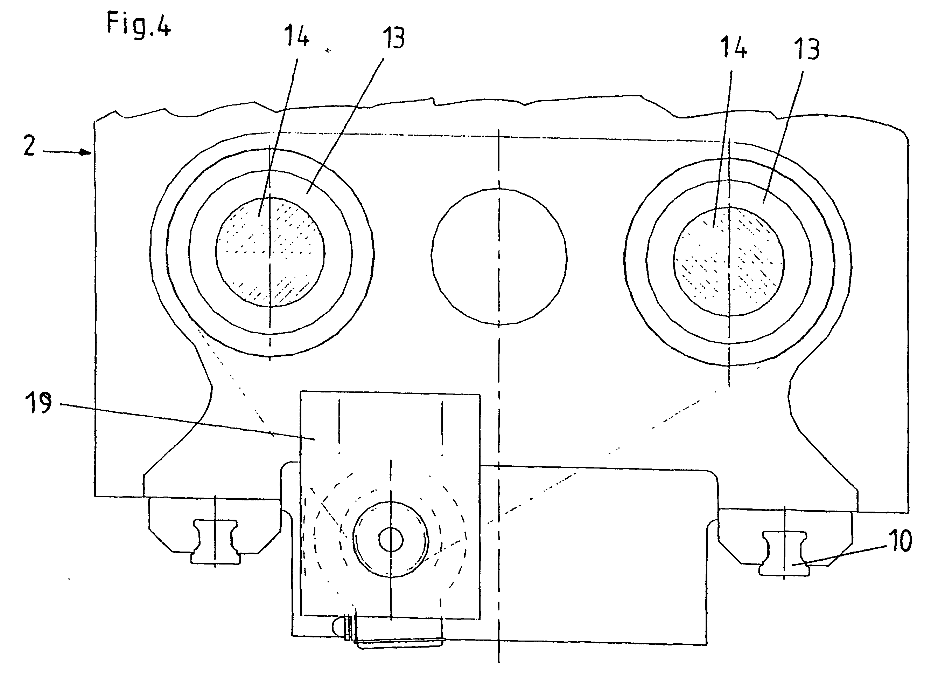

Wie aus den Fig. 2 und 4 ersichtlich, ist im gezeigten Ausführungsbeispiel die bewegbare Formaufspannplatte 7 mit zwei Muttern 13 und zwei Spindeln 14 versehen. Die Muttern 13 werden über Keilriemen 17 von einem Elektromotor 18, der vorzugsweise als Servomotor ausgebildet ist, angetrieben. Sollte die Formhöhenverstellung nicht sehr oft notwendig sein, kann anstelle eines Servomotors auch ein Drehstrommotor eingesetzt werden. Der Elektromotor 18 ist über eine Konsole 19 an der bewegbaren Formaufspannplatte 7 gelagert, und zwar unterhalb der Spindeln 14.

Durch die erfindungsgemäße Ausführung ist es möglich, den Antriebsmotor für den Schließmechanismus 8 stationär am Rahmen 1 vorzugsweise am Basisteil 2 zu lagern.

## Patentansprüche

1. Spritzgießmaschine mit einem Maschinenrahmen, einer ortsfesten und einer durch einen Schließmechanismus, der beispielsweise von einem Kurbeltrieb oder einem Kniehebelmechanismus gebildet wird, bewegbaren Formaufspannplatte, wobei die bewegbare Formaufspannplatte, und die ortsfeste Formaufspannplatte ohne Holme ausschließlich über den Maschinenrahmen verbunden sind, so daß die während des Schließvorganges auftretende Schließkraft und die während des Einspritzens auftretende Auftreibkraft zwischen den Formaufspannplatten nur über den Maschinenrahmen abgeleitet werden, und mit einem Formhöhenverstellmechanismus, **dadurch gekennzeichnet, daß** die Schließkraft vom Schließmechanismus (8) über den Formhöhenverstellmechanismus (12) auf die bewegbare Formaufspannplatte (7) übertragen wird.

2. Spritzgießmaschine nach Anspruch 1, **dadurch gekennzeichnet, daß** mindestens ein Teil des Formhöhenverstellmechanismus (12) an der bewegbaren Formaufspannplatte (7) angreift.

3. Spritzgießmaschine nach Anspruch 1 oder 2, **dadurch gekennzeichnet, daß** der Formhöhenverstellmechanismus (12) mindestens eine Mutter (13) und mindestens eine Spindel (14) umfaßt, die in der bewegbaren Formaufspannplatte (7) gelagert bzw. aufgenommen sind.

4. 'Spritzgießmaschine nach Anspruch 3, **dadurch gekennzeichnet, daß** die mindestens eine Mutter (13) in der bewegbaren Formaufspannplatte (7) drehbar gelagert ist.

5. Spritzgießmaschine nach Anspruch 3 oder 4, **dadurch gekennzeichnet, daß** die mindestens eine Spindel (14) in einen Hohlraum (15) der bewegbaren Formaufspannplatte (7) ragt.

6. Spritzgießmaschine nach Anspruch 5, **dadurch gekennzeichnet, daß** die mindestens eine Spindel (14) an ihrem, vom Schließmechanismus (8) entfernten Ende mit einer Führung (16), beispielsweise in der Form eines Lagers oder einer Gleitbüchse, versehen ist, mit der sie an der Wandung des Hohlraums (15) geführt ist.

7. Spritzgießmaschine nach einem der Ansprüche 3 bis 6, **dadurch gekennzeichnet, daß** der Formhöhenverstellmechanismus (12) der bewegbaren Formaufspannplatte (7) zwei Spindeln (14) und zwei Muttern (13) umfaßt.

8. Spritzgießmaschine nach einem der Ansprüche 1 bis 7, **dadurch gekennzeichnet, daß** der Formhöhenverstellmechanismus (12) von einem auf der bewegbaren Formaufspannplatte (7) gelagerten Motor (18) betätigt wird.

9. Spritzgießmaschine nach Anspruch 8, **dadurch gekennzeichnet, daß** als Motor (18) ein Elektromotor, vorzugsweise ein Drehstrommotor eingesetzt ist.

10. Spritzgießmaschine nach Anspruch 9, **dadurch gekennzeichnet, daß** als Motor (18) ein Servomotor eingesetzt ist.

11. Spritzgießmaschine nach einem der Ansprüche 8 bis 10, **dadurch gekennzeichnet, daß** der Motor (18) unterhalb der Spindel (14) bzw. Spindeln (14) angeordnet ist.

## Claims

1. An injection molding machine comprising a machine frame, a stationary mold mounting plate and a mold mounting plate which is movable by a closure mechanism which is formed for example by a crank drive or a bell crank mechanism, wherein the movable mold mounting plate and the stationary mold mounting plate are connected without beam members exclusively by way of the machine frame so that the closing force which occurs during the closing procedure and the driving-open force which occurs during injection between the mold mounting plates are passed only by way of the machine frame, and comprising a mold height adjustment mechanism, **characterised in that** the closing force is transmitted from the closure mechanism (8) by way of the mold height adjustment mechanism (12) to the movable mold mounting plate (7).

2. An injection molding machine according to claim 1 **characterised in that** at least a part of the mold height adjustment mechanism (12) engages the movable mold mounting plate (7).

3. An injection molding machine according to claim 1 or 2 **characterised in that** the mold height adjustment mechanism (12) includes at least one nut (13) and at least one spindle (14) which are mounted or accommodated in the movable mold mounting plate (7).

4. An injection molding machine according to claim 3 **characterised in that** the at least one nut (13) is mounted rotatably in the movable mold mounting plate (7).

5. An injection molding machine according to claim 3 or 4 **characterised in that** the at least one spindle (14) projects into a cavity (15) in the movable mold mounting plate (7).

6. An injection molding machine according to claim 5 **characterised in that** at its end remote from the closure mechanism (8) the at least one spindle (14) is provided with a guide (16), for example in the form of a bearing or a plain bush, with which it is guided at the wall of the cavity (15).

7. An injection molding machine according to one of claims 3 through 6 **characterised in that** the mold height adjustment mechanism (12) of the movable mold mounting plate (7) includes two spindles (14) and two nuts (13).

8. An injection molding machine according to one of claims 1 through 7 **characterised in that** the mold height adjustment mechanism (12) is actuated by a motor (18) mounted on the movable mold mounting plate (7).

9. An injection molding machine according to claim 8 **characterised in that** an electric motor, preferably a three-phase motor, is used as the motor (18).

10. An injection molding machine according to claim 9 **characterised in that** a servo motor is used as the motor (18).

11. An injection molding machine according to one of claims 8 through 10 **characterised in that** the motor (18) is arranged beneath the spindle (14) or spindles (14).

## Revendications

1. Machine à mouler par injection, comprenant un bâti de machine, un plateau fixe de bridage de moule fixe et un plateau mobile de bridage de moule déplaçable par un mécanisme de fermeture qui est formé, par exemple, par une commande à manivelle ou un mécanisme à levier coudé, le plateau de bridage mobile de moule et le plateau fixe de bridage de moule étant reliés sans longerons, exclusivement par l'intermédiaire du bâti de machine, de telle sorte que la force de fermeture produite pendant le processus de fermeture et la force de poussée produite pendant l'injection entre les plateaux de bridage de moule ne soient transmises que par l'intermédiaire du bâti de machine, ainsi qu'un mécanisme de réglage de hauteur de moule, **caractérisée en ce que** la force de fermeture est reportée du mécanisme de fermeture (8) sur la plateau mobile de bridage de moule mobile (7) par l'intermédiaire du mécanisme de réglage de hauteur de moule (12).

2. Machine de moulage par injection selon la revendication 1, **caractérisée en ce qu'**au moins une partie du mécanisme de réglage de hauteur de moule (12) est en prise avec le plateau mobile de bridage de moule (7).

3. Machine de moulage par injection selon la revendication 1 ou 2, **caractérisée en ce que** le mécanisme de réglage de hauteur de moule (12) comprend au moins un écrou (13) et au moins une vis (14) qui sont situés ou logés dans la plateau mobile de bridage de moule (7).

4. Machine de moulage par injection selon la revendication 3, **caractérisée en ce que** l'écrou au nombre d'au moins un (13) est logé de manière à pouvoir tourner dans le plateau mobile de bridage de moule (7).

5. Machine de moulage par injection selon la revendication 3 ou 4, **caractérisée en ce que** la vis au nombre d'au moins une (14) dépasse dans une cavité (15) du plateau mobile de bridage de moule (7).

6. Machine de moulage par injection selon la revendication 5, **caractérisée en ce que** la vis au nombre d'au moins une (14) est munie à son extrémité éloignée du mécanisme de fermeture (8) d'un guidage (16) sous la forme d'un palier ou d'une douille de guidage, par exemple, avec lequel elle est guidée contre la paroi de la cavité (15).

7. Machine de moulage par injection selon l'une des revendications 3 à 6, **caractérisée en ce que** le mécanisme de réglage en hauteur de moule (12) du plateau mobile de bridage de moule (7) comprend deux tiges (14) et deux écrous (13).

8. Machine de moulage par injection selon l'une des revendications 1 à 7, **caractérisée en ce que** le mécanisme de réglage en hauteur de moule (12) est actionné par un moteur (18) situé sur le plateau mobile de bridage de moule (7).

9. Machine de moulage par injection selon la revendication 8, **caractérisée en ce que** le moteur (18) prévu est un moteur électrique, de préférence un moteur triphasé.

10. Machine de moulage par injection selon la revendication 9, **caractérisé en ce que** le moteur (18) prévu est un servomoteur.

11. Machine de moulage par injection selon l'une des revendications 8 à 10, **caractérisée en ce que** le moteur (18) est disposé au-dessous de la vis (14), respectivement des vis (14).
